# EUROPÄISCHE PATENTANMELDUNG

(11) **EP 2 309 203 A1**
(43) Veröffentlichungstag der Anmeldung: **13.04.2011**
(21) Anmeldenummer: 09172525.9
(22) Anmeldetag: 08.10.2009
(51) Int. Cl.: F24J 2/52, H01L 31/042

(54) **Vorrichtung und Verfahren zum Befestigen einer Vielzahl von Solarmodulen auf einer Außenhaut eines Gebäudes**

(71) Anmelder: Rauschert Heinersdorf-Pressig GmbH, 96332 Pressig (DE)
(72) Erfinder: Neubauer, Roland, 96317 Kronach (DE); Metzler, Richard, 96332 Pressig (DE)
(74) Vertreter: Sandmann, Wolfgang

(57) **Zusammenfassung**

Die Vorrichtung (10) hat eine Mehrzahl auf der Außenhaut (30) angeordnete Seile (51-56), wobei zumindest jeweils zwei Drahtseile (55,56) dazu eingerichtet sind, eine Mehrzahl der Solarmodule (22-25) zu haltern.

## Beschreibung

Die Erfindung betrifft eine Vorrichtung und ein Verfahren zum Befestigen einer Vielzahl von Solarmodulen auf einer Außenhaut eines Gebäudes.

Solarmodule, wie beispielsweise Photovoltaikmodule oder thermische Solarkollektoren, werden herkömmlicherweise mittels Befestigungseinrichtungen auf der Außenhaut des Gebäudes, zum Beispiel auf dem Dach oder an der Fassade des Gebäudes, gegen ein Verrutschen und insbesondere gegen Wind und Sturm befestigt.

Eine solche Befestigungseinrichtung hat üblicherweise eine Unterkonstruktion, auf welcher ein oder mehrere Solarmodule gehaltert werden. Die Unterkonstruktion der Befestigungseinrichtung wird wiederum mit der Außenhaut verbunden, insbesondere verschraubt, um diese mit der Außenhaut fest zu verbinden.

An diesen Verbindungsstellen zwischen der jeweiligen Unterkonstruktion und der Außenhaut des Gebäudes entstehen hohe Punktlasten. Aufgrund dieser Punktlasten entstehen an der Vielzahl der Verbindungsstellen potentielle Dichtheitsprobleme, insbesondere bei längeren Betriebsdauern.

Des Weiteren sind für die Befestigung der Solarmodule auf dem Dach des Gebäudes oftmals nur geringe Reserven hinsichtlich der zusätzlichen Gewichtsbelastung vorhanden. Jegliches zusätzliches Gewicht, zum Beispiel das von Befestigungseinrichtungen und Ständersystemen, reduziert die Gewichtsreserven für die eigentlichen Solarmodule. Ein herkömmliches Ständersystem ist beispielsweise aus der DE 10 2009 005 739 U1 bekannt.

Besonders gravierend wirkt sich ein zusätzliches Gewicht bei der Verwendung von Ständersystemen auf Folienflachdächern oder Betumiendächern aus. Hierbei werden Ständersysteme auf großen Metallplatten, die beispielsweise mit Beton oder anderen Materialien beschwert werden müssen, fixiert.

Eine Aufgabe der vorliegenden Erfindung liegt demnach darin, eine Befestigungsmöglichkeit für eine Vielzahl von Solarmodulen auf einer Außenhaut eines Gebäudes unter Verminderung obiger Dichtheitsprobleme zu schaffen.

Ferner ist es eine Aufgabe, eine gewichtsreduzierte Befestigung für eine Vielzahl von Solarmodulen auf einer Außenhaut eines Gebäudes bereitzustellen.

Erfindungsgemäß wird diese gestellte Aufgabe durch eine Vorrichtung zum Befestigen einer Vielzahl von Solarmodulen auf einer Außenhaut eines Gebäudes mit den Merkmalen des Patentanspruchs 1 und durch ein Verfahren zum Befestigen einer Vielzahl von Solarmodulen auf einer Außenhaut eines Gebäudes mit den Merkmalen des Patentanspruchs 15 gelöst.

Demgemäß wird eine Vorrichtung zum Befestigen einer Vielzahl von Solarmodulen auf einer Außenhaut eines Gebäudes vorgeschlagen, welche eine Mehrzahl auf der Außenhaut angeordnete Seile, insbesondere Drahtseile oder Kunststoffseile, aufweist, wobei zumindest jeweils zwei Drahtseile dazu eingerichtet sind, eine Mehrzahl der Solarmodule zu haltern.

Durch die Verwendung der Drahtseile zur Halterung der Solarmodule entfällt vorteilhafterweise ein vielfaches, herkömmlich notwendiges Durchdringen der Außenhaut.

Des Weiteren ist das aus den Drahtseilen bestehende Drahtsystem zum Haltern der Solarmodule gegenüber den herkömmlichen Systemen, insbesondere Ständersystemen, gewichtsreduziert. Aufgrund dieser Gewichtsersparnis gegenüber herkömmlichen Ständersystemen kann diese anteilig für die Installation von mehr Solarmodulen auf der zur Verfügung stehenden Außenhaut oder Außenfläche eingesetzt werden. Weiter entfallen aufgrund der Verwendung der Drahtseile die an den Verbindungsstellen herkömmliche Abdichtungsproblematik und der damit verbundene erhöhte Material- und Montageaufwand. Die herkömmlich auftretende Punktbelastung bekannter Montagesysteme wird erfindungsgemäß flächig durch den Einsatz der Drahtseile mit oder auch ohne zusätzliche Querlattung übertragen.

Die Außenhaut umfasst dabei insbesondere die Außenwände des Gebäudes und das Dach des Gebäudes. Die Drahtseile sind vorzugsweise vertikal oder horizontal auf der Außenhaut angeordnet.

Weiter wird ein Verfahren zum Befestigen einer Vielzahl von Solarmodulen auf einer Außenhaut eines Gebäudes vorgeschlagen, welches folgende Schritte hat:

Anordnen einer Mehrzahl von Seilen, insbesondere Drahtseilen oder Kunststoffseilen, auf der Außenhaut; und Befestigen der Solarmodule mittels der Drahtseile derart, dass zumindest jeweils zwei Drahtseile eine Mehrzahl der Solarmodule haltern.

Beispielsweise werden die Drahtseile auf einer Dachfläche des Gebäudes verlegt. Die Drahtseile können einzeln oder gebündelt über die Dachkanten des Gebäudes geführt werden und beispielsweise an der Fassade oder dergleichen befestigt werden. Je nach Bauart der zu befestigenden Solarmodule werden diese auf oder unter oder seitlich der Dachseile mit Klemmen, Schraubverbindungen, Nietverbindungen oder Quetschverbindungen befestigt. In Abhängigkeit der verwendeten Rahmen oder der verwendeten Konstruktion der Solarmodule können die Drahtseile durch entsprechende Löcher der Rahmen geführt werden oder in hintergriffige Schlitzlöcher eingefasst werden.

Vorteilhafte Ausgestaltungen und Weiterbildungen der Erfindung ergeben sich aus den Unteransprüchen sowie der Beschreibung unter Bezugnahme auf die Zeichnungen.

Gemäß einer bevorzugten Weiterbildung überspannt das jeweilige Drahtseil zumindest einen Teil der Außenhaut.

Gemäß einer weiteren bevorzugten Weiterbildung überspannt das jeweilige Drahtseil zumindest eine Dachhälfte des Gebäudes. Insbesondere überspannen sämtliche Drahtseile beide Dachhälften des Gebäudes.

Gemäß einer weiteren bevorzugten Weiterbildung ist das zumindest ein Ende des jeweiligen, zumindest eine Dachhälfte überspannenden Drahtseils an einer Außenhaut des Gebäudes, an einer tragenden Einrichtung des Gebäudes, an einem Fundament des Gebäudes oder an einem eigens vorgesehenen Fundament befestigt.

Durch die Vermeidung der unmittelbaren Befestigung der Solarmodule auf der Außenhaut, insbesondere auf dem Dach des Gebäudes, kann ein Durchdringen der Außenhaut reduziert und insbesondere vermieden werden. Durch die Vermeidung der Durchdringung der Außenhaut werden potentielle Dichtheitsprobleme an diesen Stellen vermieden.

Gemäß einer weiteren bevorzugten Weiterbildung ist das jeweilige Ende des jeweiligen, beide Dachhälften überspannenden Drahtseils an einer Außenhaut des Gebäudes, an einer tragenden Einrichtung des Gebäudes, an einem Fundament des Gebäudes oder an einem eigens vorgesehenen Fundament befestigt.

Gemäß einer weiteren bevorzugten Weiterbildung sind die Drahtseile über ein Flachdach des Gebäudes gespannt. In einem solchen Fall sind die Enden der Drahtseile vorzugsweise an einer Attika des Flachdachs befestigt.

Gemäß einer weiteren bevorzugten Weiterbildung ist ein jeweiliges Halterungsseil parallel zu der jeweiligen Attika angeordnet und an dieser befestigt ist. Das jeweilige Halterungsseil ist dazu eingerichtet, die über das Flachdach gespannten Drahtseile zum Haltern der Solarmodule zu haltern.

Beispielsweise werden die Drahtseile lose auf dem Flachdach verlegt. Die Befestigung der Drahtseile bzw. des aus den Drahtseilen bestehenden Drahtseilnetzes erfolgt an vorbestimmten Stellen wiederum mittels zumindest eines Halterungsseils. Das zumindest eine Halterungsseil ist an der Attika des Flachdaches befestigt. Somit wird das Drahtseilnetz nicht im Staunässebereich des Flachdaches befestigt, so dass die Wahrscheinlichkeit für eine Undichtheit des Flachdachs vermindert ist.

Gemäß einer weiteren bevorzugten Weiterbildung hat die Vorrichtung eine Mehrzahl von auf der Außenhaut angeordneten Rohren, welche unter einem vorbestimmten Winkel zu den Drahtseilen angeordnet sind. Beispielsweise sind die Rohre zu den Drahtseilen unter einem Winkel von 90° angeordnet.

Gemäß einer weiteren bevorzugten Weiterbildung sind die Drahtseile vertikal und die Rohre horizontal auf der Außenhaut angeordnet. Alternativ sind die Rohre vertikal und die Drahtseile horizontal auf der Außenhaut angeordnet.

Die Rohre und Seile bilden ein Netz aus, unter dem vorzugsweise Unterlegplatten verlegt werden, um Lasten zu übertragen und auftretende Reibung zu minimieren.

Gemäß einer weiteren bevorzugten Weiterbildung sind die Drahtseile durch Löcher in den Rohren zur Halterung der Rohre geführt. Alternativ sind die Drahtseile durch hintergriffige Schlitzlöcher in den Rohren zur Halterung der Rohre geführt.

Gemäß einer weiteren bevorzugten Weiterbildung sind die Rohre mittels einer jeweiligen Halterungs-Einrichtung auf den Drahtseilen befestigt. Alternativ sind die Rohre mittels einer jeweiligen Halterungs-Einrichtung unter den Drahtseilen befestigt. In einem solchen Fall drücken die Drahtseile die Rohre auf die Außenhaut des Gebäudes. Somit sind die Rohre durch dieses Niederdrücken schon zumindest teilweise auf der Außenhaut gehaltert.

Gemäß einer weiteren bevorzugten Weiterbildung ist zumindest ein Abstandshalter vorgesehen, welcher dazu eingerichtet ist, einen Abstand zwischen den Solarmodulen und der Außenhaut des Gebäudes bereitzustellen oder einzustellen.

Gemäß einer weiteren bevorzugten Weiterbildung ist zumindest ein Profilelement aus Kunststoff oder Aluminium als Abstandshalter zwischen den Drahtseilen und der Außenhaut verlegt.

Der zumindest eine Abstandshalter ist vorzugsweise auf dem Netz aus Drahtseilen oder aus Drahtseilen und Rohren montiert. Auf dem zumindest einen Abstandshalter werden wiederum die Solarmodule montiert. Die Abstandshalter haben den Effekt der verbesserten Hinterlüftung der Solarmodule. Insbesondere werden die Solarmodule bei Flachdächern damit aus dem Staunässebereich gehoben. Die Abstandshalter können vorzugsweise aus Profilelementen bestehen, die als Quer- und/oder Längslattung in Teilsegmenten oder durchgängig verlegbar sind.

Gemäß einer weiteren bevorzugten Weiterbildung ist das jeweilige Drahtseil mit einer Ummantelung versehen. Die Ummantelung ist vorzugsweise aus Kunststoff.

Durch die Ummantelung werden vorteilhafterweise Beschädigungen durch Scheuem oder Reibung vermieden.

Gemäß einer weiteren bevorzugten Weiterbildung ist zumindest eine Baustahlmatte vorgesehen. Die Baustahlmatte ist vorzugsweise zum Haltern der Solarmodule eingerichtet. Die Baustahlmatte selbst ist mittels des Drahtseils am Gebäude befestigt.

Des Weiteren können die Enden der Drahtseile mit Zugfedern versehen werden, um Spannungen aufgrund unterschiedlicher Wärmeausdehnungskoeffizienten der verwendeten Bauelemente auszugleichen. Des Weiteren können bei langen Drahtseilstrecken oder an Montageorten, an denen hohe Windstärken herrschen, punktuell zusätzliche Verspannungseinrichtungen montiert werden.

Des Weiteren wird das aus den erfindungsgemäßen Drahtseilen bestehende Drahtseilsystem vorzugsweise elektrisch geerdet, um als zusätzlicher Blitzschutz für das Gebäude dienen zu können.

Ferner können die erfindungsgemäßen Drahtseile als Befestigungsmöglichkeiten für notwendige Leitungen der aus den Solarmodulen bestehenden Solaranlage eingesetzt werden.

Weiter wird eine Vorrichtung zum Befestigen einer Vielzahl von Solarmodulen beispielsweise auf einer Außenhaut eines Gebäudes oder zwischen zumindest zwei Befestigungseinrichtungen vorgeschlagen, welche eine Mehrzahl auf der Außenhaut oder zwischen den zumindest zwei Befestigungseinrichtungen angeordneten Drahtseilen hat, wobei zumindest jeweils zwei Drahtseile dazu eingerichtet sind, eine Mehrzahl der Solarmodule zu haltern.

Gemäß einer bevorzugten Ausgestaltung ist zumindest eine Ständervorrichtung oder eine Aufständerung vorgesehen, welche dazu eingerichtet ist, zumindest ein jeweiliges Solarmodul zur Vergrößerung der auf das Solarmodul einfallenden Lichtmenge aufzuständem. Gemäß einer weiteren bevorzugten Ausgestaltung hat die Vorrichtung zumindest eine Nachführeinrichtung. Die Nachführeinrichtung ist dazu eingerichtet, die Solarmodule der optimalen Lichteinstrahlung insbesondere in Abhängigkeit der Tageszeit - nachzuführen.

Die Erfindung wird nachfolgend anhand der in den schematischen Figuren angegebenen Ausführungsbeispiele näher erläutert. Es zeigen:
- Fig. 1: eine schematische Ansicht eines ersten Ausführungsbeispiels ei- ner erfindungsgemäßen Vorrichtung zum Befestigen einer Viel- zahl von Solarmodulen auf einer Außenhaut eines Gebäudes;
- Fig. 2: eine schematische Detailansicht der Fig. 1 zur Darstellung der Befestigung der erfindungsgemäßen Drahtseile;
- Fig. 3: eine schematische Ansicht eines zweiten Ausführungsbeispiels einer erfindungsgemäßen Vorrichtung zum Befestigen einer Viel- zahl von Solarmodulen auf einer Außenhaut eines Gebäudes;
- Fig. 4: eine schematische Detailansicht der Fig. 3 zur Darstellung der Befestigung der erfindungsgemäßen Drahtseile;
- Fig. 5: eine schematische Detailansicht der Fig. 3 zur Darstellung der Befestigung der erfindungsgemäßen Drahtseile;
- Fig. 6: eine schematische Ansicht eines dritten Ausführungsbeispiels einer erfindungsgemäßen Vorrichtung zum Befestigen einer Viel- zahl von Solarmodulen auf einer Außenhaut eines Gebäudes;
- Fig. 7: eine schematische Ansicht eines vierten Ausführungsbeispiels einer erfindungsgemäßen Vorrichtung zum Befestigen einer Viel- zahl von Solarmodulen auf einer Außenhaut eines Gebäudes;
- Fig. 8 und 9: eine schematische Ansicht eines fünften Ausführungsbeispiels einer erfindungsgemäßen Vorrichtung zum Befestigen einer Viel- zahl von Solarmodulen auf einer Außenhaut eines Gebäudes;
- Fig. 10: eine schematische Detailansicht der Fig. 9 zur Darstellung der Befestigung der erfindungsgemäßen Drahtseile;
- Fig. 11: eine schematische Schnittansicht der Fig. 10 zur Darstellung der Befestigung der erfindungsgemäßen Drahtseile;
- Fig. 12-14: schematische Ansichten eines sechsten Ausführungsbeispiels ei- ner erfindungsgemäßen Vorrichtung zum Befestigen einer Viel- zahl von Solarmodulen auf einer Außenhaut des Gebäudes;
- Fig. 15: eine schematische Übersicht einer Mehrzahl von erfindungsge- mäßen Möglichkeiten für die Befestigung eines Solarmoduls durch zumindest zwei Drahtseile;
- Fig. 16: eine schematische Detailansicht der Befestigung der Drahtseile durch hintergriffige Schlitzlöcher gemäß Fig. 15;
- Fig. 17: eine schematische Ansicht eines achten Ausführungsbeispiels einer erfindungsgemäßen Vorrichtung zum Befestigen einer Viel- zahl von Solarmodulen auf einer Außenhaut eines Gebäudes;
- Fig. 18 und 19: schematische Ansichten der Kopplung des Führungsrohres auf dem Drahtseil gemäß Fig. 17;
- Fig. 20: eine schematische Ansicht eines neunten Ausführungsbeispiels einer erfindungsgemäßen Vorrichtung zum Befestigen einer Viel- zahl von Solarmodulen zwischen zwei Befestigungseinrichtun- gen;
- Fig. 21: eine schematische Ansicht eines zehnten Ausführungsbeispiels einer erfindungsgemäßen Vorrichtung zum Befestigen einer Viel- zahl von Solarmodulen zwischen zwei Befestigungseinrichtun- gen;
- Fig. 22: eine schematische Detailansicht der Befestigung der Drahtseile in den Betonblöcken gemäß Fig. 21;
- Fig. 23: eine schematische Ansicht eines elften Ausführungsbeispiels ei- ner erfindungsgemäßen Vorrichtung zum Befestigen einer Viel- zahl von Solarmodulen mittels einer Vielzahl von Befestigungs- einrichtungen;
- Fig. 24: eine schematische Detailansicht der Metallstangen zur Kopplung der Drahtseile mit der Befestigungseinrichtung;
- Fig. 25: eine schematische Detailansicht des unteren Teils einer Befesti- gungseinrichtung;
- Fig. 26: eine schematische Detailansicht eines ersten Ausführungsbei- spiels einer Verbindungsvorrichtung;
- Fig. 27: eine schematische Detailansicht eines zweiten Ausführungsbei- spiels einer Verbindungsvorrichtung;
- Fig. 28: eine schematische Ansicht einer Befestigungseinrichtung zur Terminierung einer erfindungsgemäßen Freilandanlage;
- Fig. 29: eine schematische Ansicht eines zwölften Ausführungsbeispiels einer Vorrichtung zum Befestigen einer Vielzahl von Solarmodu- len;
- Fig. 30: eine schematische Ansicht eines Ausführungsbeispiels eines So- larmoduls mit einer Nachführeinrichtung gemäß der Erfindung;
- Fig. 31, 32: schematische Detailansichten der Fig. 30;
- Fig. 33: eine schematische Ansicht eines dreizehnten Ausführungsbei- spiels einer erfindungsgemäßen Vorrichtung zum Befestigen einer Vielzahl von Solarmodulen; und
- Fig. 34: ein schematisches Ablaufdiagramm eines Ausführungsbeispiels eines Verfahrens zum Befestigen einer Vielzahl von Solarmodu- len auf einer Außenhaut eines Gebäudes.

In allen Figuren sind gleiche bzw. funktionsgleiche Mittel und Einrichtungen - sofern nichts anderes angegeben - mit denselben Bezugszeichen versehen.

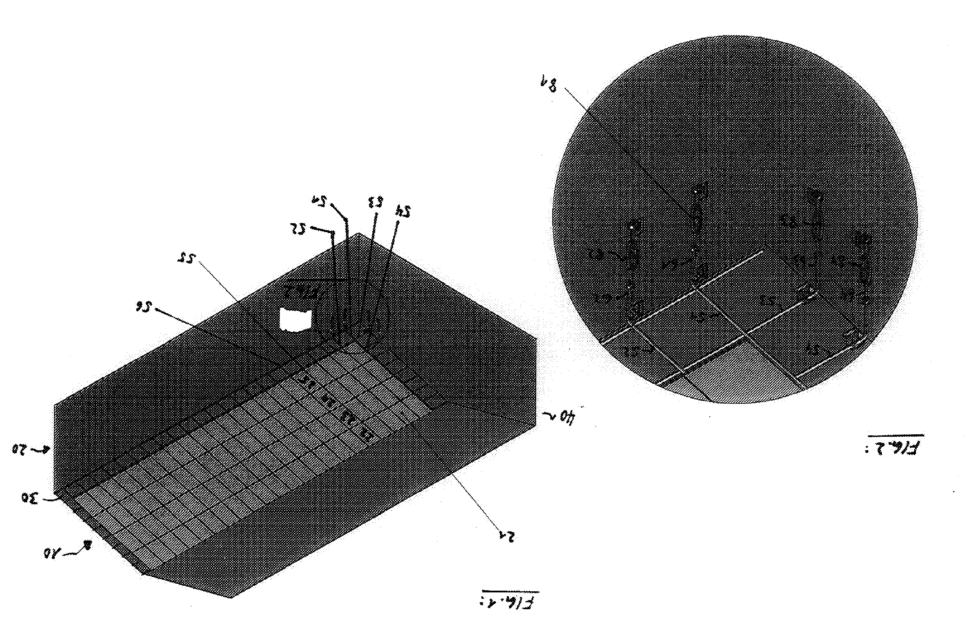

In Fig. 1 ist eine schematische Ansicht eines ersten Ausführungsbeispiels einer erfindungsgemäßen Vorrichtung 10 zum Befestigen einer Vielzahl von Solarmodulen 21-25 auf einer Außenhaut 30, insbesondere einem Dach, eines Gebäudes 40 dargestellt. Gemäß dem Ausführungsbeispiel der Fig. 1 sind 4 Reihen und 22 Spalten von Solarmodulen gezeigt. Aus Gründen der Übersichtlichkeit sind allerdings nur fünf Solarmodule mit den Bezugszeichen 21-25 bezeichnet.

Die Vorrichtung 10 hat eine Mehrzahl auf dem Dach 30 angeordnete Drahtseile 51-56. Dabei sind eine Anzahl vertikal angeordneter Drahtseile 51, 52 und 55, 56 sowie eine Anzahl horizontal angeordneter Drahtseile 53, 54 vorgesehen. Auch hier sind aus Gründen der Übersichtlichkeit nur sechs Drahtseile mit den Bezugszeichen 51-56 versehen worden. Die vertikal und horizontal angeordneten Drahtseile bilden insbesondere ein Drahtseilnetz zum Haltern der Solarmodule 21-25 aus.

Zumindest jeweils zwei Drahtseile, beispielsweise die Drahtseile 55 und 56, sind dazu eingerichtet, eine Mehrzahl der Solarmodule, beispielsweise die Solarmodule 22-25, zu haltern. Vorzugsweise wird das Drahtseilnetz 50 nur von einigen der Drahtseile 51-56 gehaltert, so dass nur diese einigen Drahtseile über das Dach 30 geführt werden müssen. Dabei überspannt das jeweilige Drahtseil 51-56 zumindest einen Teil des Daches 30. Insbesondere überspannen die Drahtseile 51-56 zumindest eine Dachhälfte. Falls die Drahtseile 51, 52, 55, 56 nur eine Dachhälfte überspannen sollen, so sind sie am First des Daches 30 befestigt.

Alternativ können die Drahtseile 51, 52, 55 und 56 auch beide Dachhälften 30 des Gebäudes 40 überspannen. Insbesondere sind die Drahtseile 51-56 durch Löcher oder hintergriffige Schlitzlöcher in den Rahmen der Solarmodule 21-25 geführt.

Vorzugsweise hat das jeweilige Drahtseil 51-56 eine Ummantelung. Die Ummantelung ist beispielsweise aus Kunststoff.

Weiter zeigt Fig. 2 eine schematische Detailansicht der Fig. 1 zur Darstellung der Befestigung der erfindungsgemäßen Drahtseile 51-54. Dabei sind die Drahtseilenden 61-64 der Drahtseile 51-54 mit einem jeweiligen individuellen Spannsystem 61-64 an der Fassade des Gebäudes 40 befestigt.

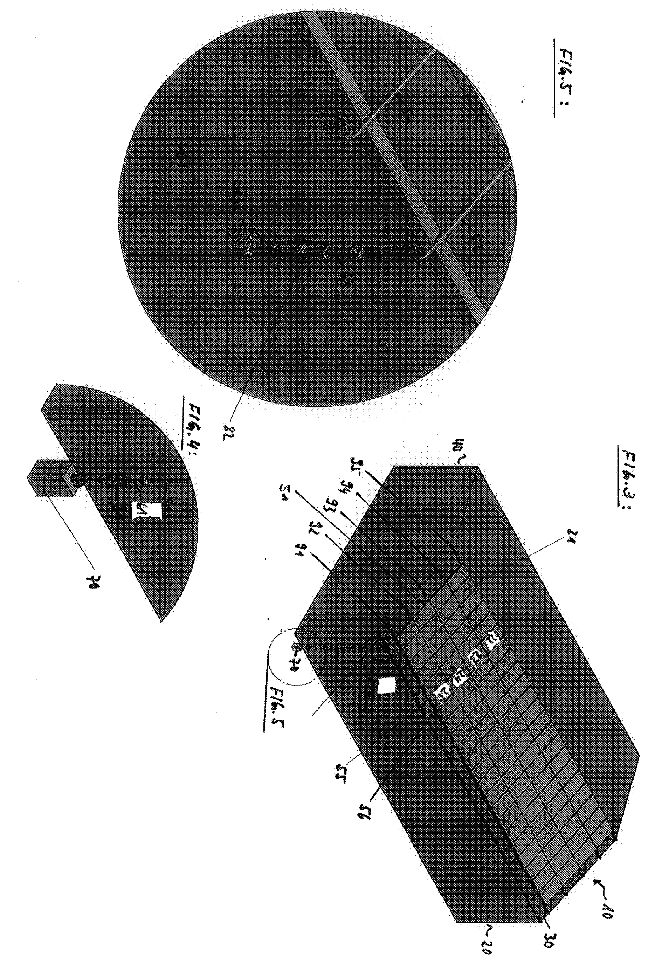

Fig. 3 zeigt eine schematische Ansicht eines zweiten Ausführungsbeispiels einer erfindungsgemäßen Vorrichtung 10 zum Befestigen einer Vielzahl von Solarmodulen 21-25 auf einem Dach 30 eines Gebäudes 40.

Das Ausführungsbeispiel der Fig. 3 unterscheidet sich von dem Ausführungsbeispiel der Fig. 1 dahingehend, dass die horizontal verlaufenden Drahtseile 53, 54 der Fig. 1 in dem zweiten Ausführungsbeispiel der Fig. 3 durch Rohre 91-95, insbesondere Stahlrohre, ersetzt sind. Die Rohre 91-95 oder Rohrprofile bilden zusammen mit den vertikal angeordneten Drahtseilen 55, 56 ein Netz aus. Hier ist zu beachten, dass aus Gründen der Übersichtlichkeit nur zwei der vertikal verlaufenden Drahtseile mit Bezugszeichen, hier 51 und 52, versehen sind. Des Weiteren zeigt die Fig. 3 zwei alternative Befestigungsmöglichkeiten für die Drahtseile 51 und 52. Detailansichten hierzu sind in den Fig. 4 und 5 dargestellt.

Gemäß Fig. 4 wird das Drahtseil 51 an seinem Drahtseilende 61 mittels eines Spannsystems 81 an einem eigens vorgesehenen Fundament 70 befestigt.

Gemäß dem Ausführungsbeispiel nach Fig. 5 wird das Drahtseil 52 an seinem Drahtseilende 62 mittels eines Spannsystems 82 am Gebäude 40, insbesondere direkt an der Fassade des Gebäudes 40, befestigt.

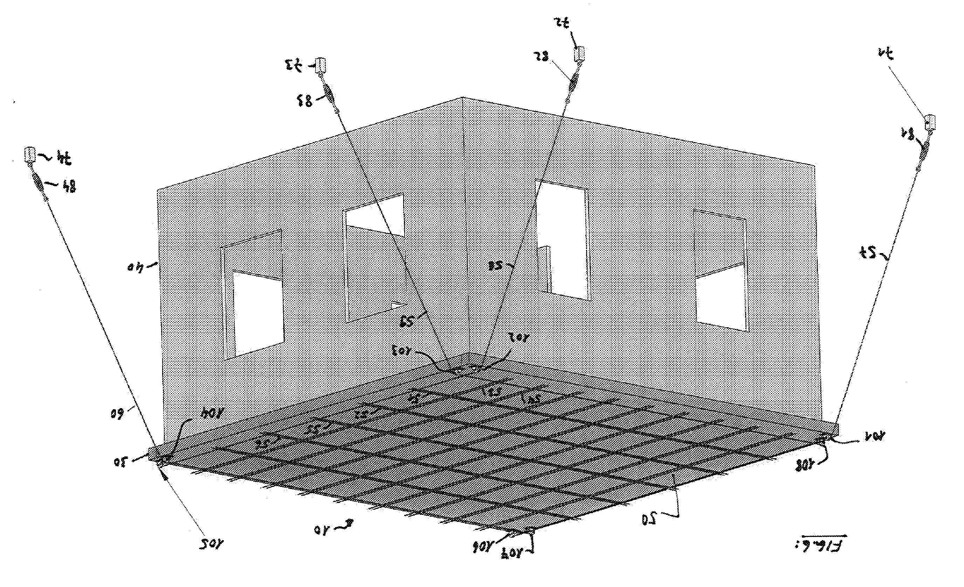

Fig. 6 zeigt eine schematische Ansicht eines dritten Ausführungsbeispiels einer erfindungsgemäßen Vorrichtung 10 zum Befestigen einer Vielzahl von Solarmodulen auf einer Außenhaut 30, hier einem Flachdach, eines Gebäudes 40. Im Ausführungsbeispiel nach Fig. 6 sind die Solarmodule noch nicht auf dem Drahtseilnetz 50 aus den Drahtseilen 51-56 befestigt.

Das Drahtseilnetz 50 ist durch Halterungsseile 57-60 auf dem Flachdach 30 des Gebäudes 40 gehaltert. Die Halterungsseile 57-60 sind über Umlenkrollen 101-108 in Richtung des Bodens geführt. Dabei ist das jeweilige Halterungsseil 57-60 mittels eines jeweiligen Spannsystems 81-84 an einem jeweiligen eigens vorgesehenen Fundament 71-74 gespannt. Die Fundamente 71-74 sind mit dem Boden fest verbunden.

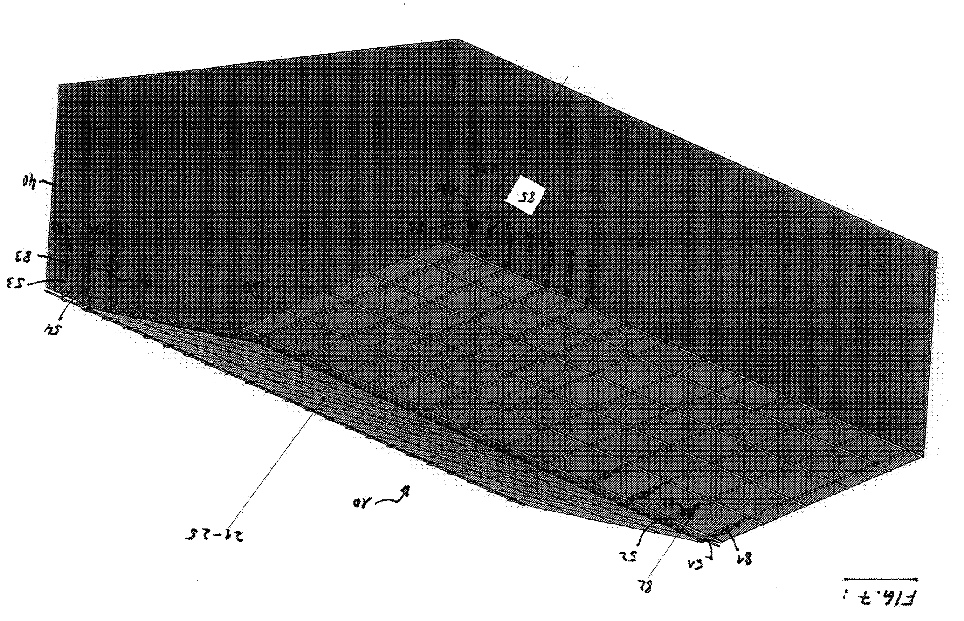

In Fig. 7 ist eine schematische Ansicht eines vierten Ausführungsbeispieles einer erfindungsgemäßen Vorrichtung 10 zum Befestigen einer Vielzahl von Solarmodulen 21-25 auf einer Außenhaut 30 eines Gebäudes 40 dargestellt. Dabei unterstreicht das Ausführungsbeispiel der Fig. 7, dass das Drahtseilnetz 50 an einer Mehrzahl verschiedener Positionen befestigt werden kann.

Wie in den vorherigen Ausführungsbeispielen sind aus Gründen der Übersichtlichkeit nur manche der Drahtseile 51-56 mit Bezugszeichen versehen worden. Entsprechend sind auch nur manche der Spannsysteme 81-86 und manche der Befestigungseinrichtungen 131-136 mit Bezugszeichen versehen.

Dabei sind die Drahtseile 51 und 52 an Sparren des Daches 30 mittels ihrer Spannsysteme 81 und 82 befestigt. Demgegenüber sind die Drahtseile 53-56 mittels ihrer Spannsysteme 83-86 an der Fassade des Gebäudes 40 befestigt.

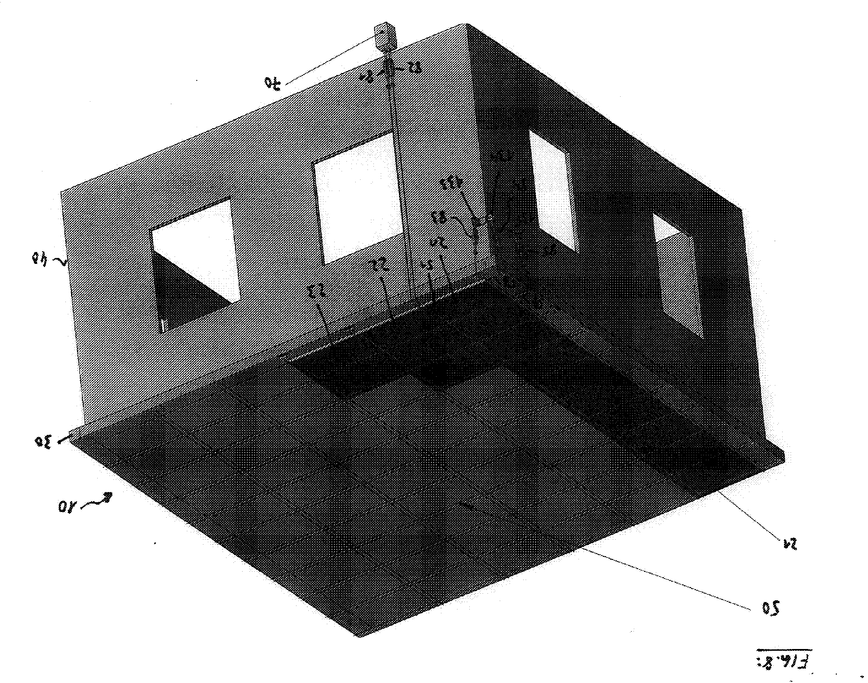

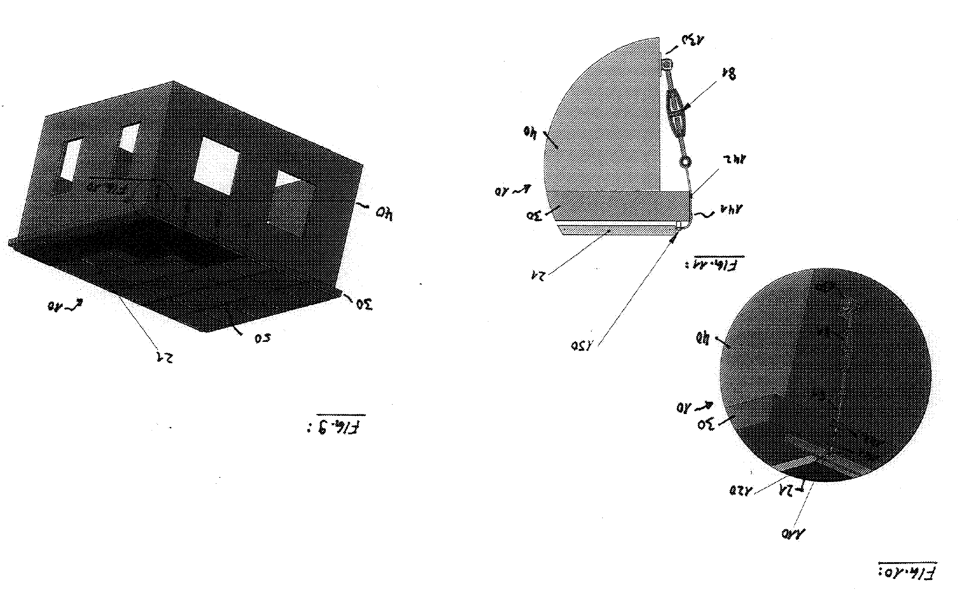

Die Fig. 8 und 9 zeigen eine schematische Ansicht eines fünften Ausführungsbeispiels einer erfindungsgemäßen Vorrichtung 10 zum Befestigen einer Vielzahl von Solarmodulen 21-25 auf einer Außenhaut 30 des Gebäudes 40. Die Außenhaut 30 ist nach Fig. 8 als Flachdach ausgebildet. Dabei zeigt auch die Fig. 8 die unterschiedlichen Befestigungsmöglichkeiten der Drahtseile 51, 53, 54 an einem eigens vorgesehenen Fundament 70 bzw. an der Fassade des Gebäudes 40. Zur Befestigung an der Fassade des Gebäudes 40 sind Befestigungseinrichtungen 133-135 an der Fassade des Gebäudes 40 zur Kopplung zu den jeweiligen Spannsystemen 83-85 vorgesehen.

Die Fig. 10 zeigt eine schematische Detailansicht der Fig. 9 zur Darstellung der Befestigung der erfindungsgemäßen Drahtseile. Dabei ist das Drahtseil 51 mittels eines Loches 120 durch einen Rahmen des Solarmoduls 21 geführt und gespannt.

Ein auf dem Flachdach 30 montiertes Stahlrohr 110 dient zur Führung des Stahlseiles 51. Weiter sind zwei Klemmplatten 141 und 142 für ein Führungsrohr vorgesehen, durch welches das Drahtseil 51 geführt ist. Das Drahtseilende 61 des Drahtseiles 51 ist mittels eines Spannsystems 81, beispielsweise mittels eines Gewindespanners, mit der Fassade des Gebäudes 40 gekoppelt. Zur Verwirklichung der Kopplung ist eine Befestigungseinrichtung 130 an der Fassade des Gebäudes 40 montiert.

Dazu zeigt die Fig. 11 eine schematische Schnittansicht der Fig. 10.

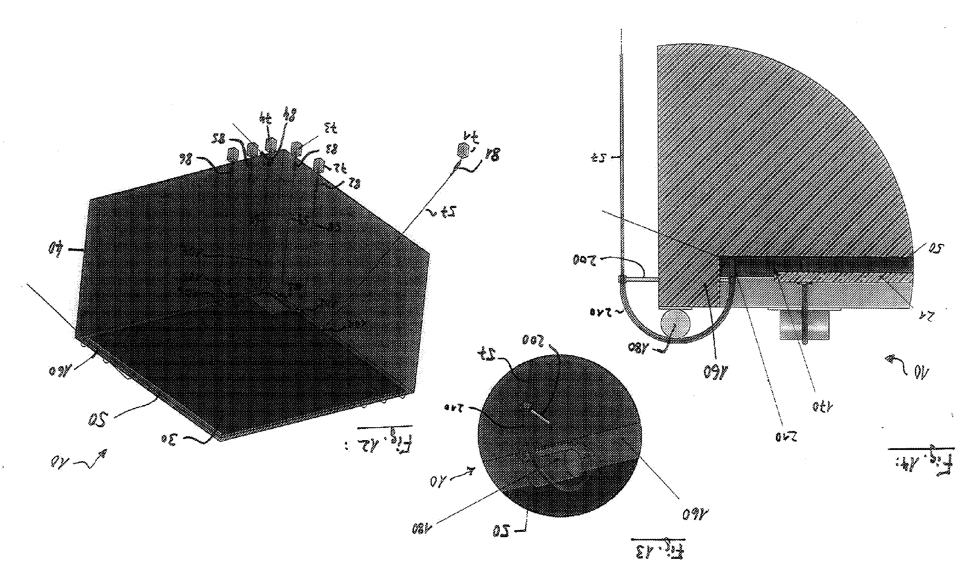

Die Fig. 12 bis 14 zeigen schematische Ansichten eines sechsten Ausführungsbeispiels einer erfindungsgemäßen Vorrichtung 10 zum Befestigen einer Vielzahl von Solarmodulen 21-25 auf einer Außenhaut 30 des Gebäudes 40. Die Außenhaut 30 des Gebäudes 40 ist nach den Fig. 12 bis 14 als Flachdach ausgebildet. Das Flachdach 30 ist von einer Attika 160 umgeben.

Die beispielhafte Kopplung des Halterungsseils 57 mit dem Drahtseilnetz 50 und damit die Führung des Halterungsseils 57 über die Attika 160 zeigen die Fig. 13 und 14.

Das Halterungsseil 57 ist dabei in einem Rohr 210 über die Attika 160 geführt. Wiederum zur Führung des Rohres 210 über die Attika 160 ist eine Auflage 180 vorgesehen. Zur Halterung des Rohres 210 ist ein Abstandshalter 200 vorgesehen, welcher das Rohr 210 mit dem Gebäude 40 verbindet.

Des Weiteren zeigt Fig. 14 die Verwendung eines Quadratrohres 170 zwischen dem Solarmodul 21 und dem Drahtseilnetz 50. Das Quadratrohr 170 ist dabei als Abstandshalter zur Belüftung zwischen dem Solarmodul 21 und dem Drahtseilnetz 50 eingerichtet.

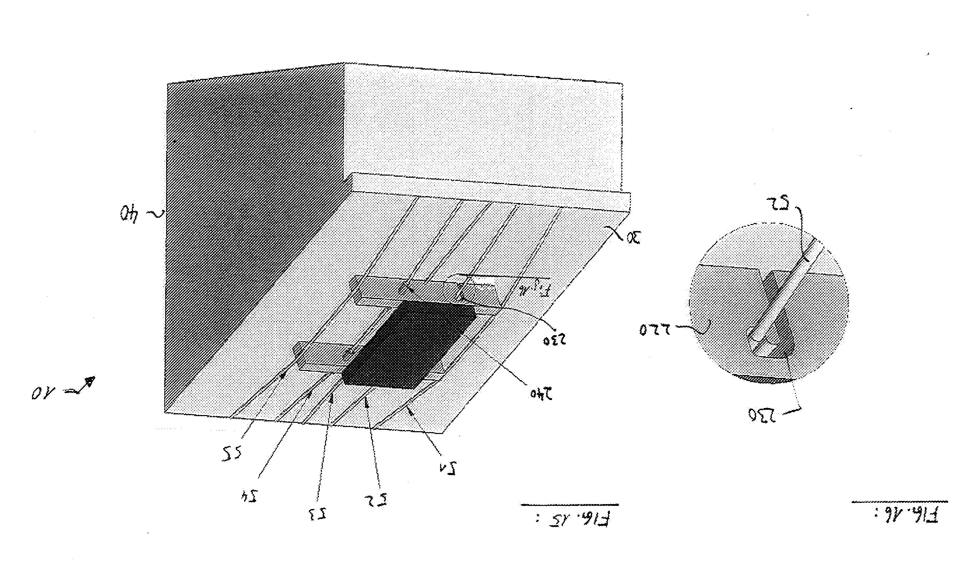

Weiterhin zeigt Fig. 15 eine schematische Übersicht einer Mehrzahl von erfindungsgemäßen Möglichkeiten für die Befestigung eines Solarmoduls 21 durch zumindest zwei Drahtseile 51-55. Dabei ist das Solarmodul 21 insbesondere durch eine Unterkonstruktion 220 oder alternativ mittels Rohren mit dem Drahtseilnetz 50 gekoppelt.

Beispielsweise ist durch das Drahtseil 51 eine Befestigung des Solarmoduls 21 von oben gezeigt. Weiter ist durch das Drahtseil 52 eine Befestigung durch hintergriffige Schlitzlöcher 230 gezeigt. Die hintergriffigen Schutzlöcher 230 sind dabei vorzugsweise durch die Unterkonstruktion 220 geführt. Details hierzu zeigt Fig. 16.

Durch das Drahtseil 53 ist eine Befestigung der Unterkonstruktion 220 und damit des Solarmoduls 21 von unten gezeigt. Durch das Drahtseil 54 ist eine Befestigung mittels Bohrungen durch die Unterkonstruktion 220 illustriert. Bei einer solchen Anordnung einer Befestigung mittels Bohrungen ist vorzugsweise eine Verschiebesicherung 240 vorgesehen. Ferner ist durch das Drahtseil 55 eine seitliche Befestigung der Unterkonstruktion 220 gezeigt.

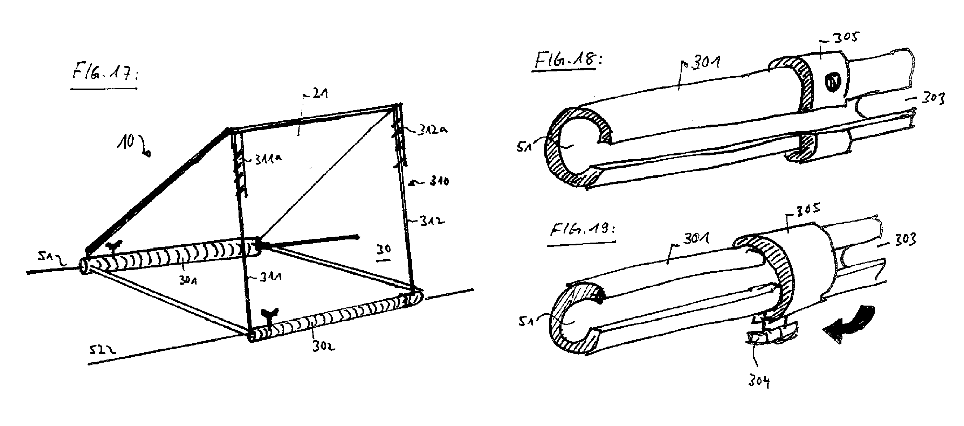

In Fig. 17 ist eine schematische Ansicht eines achten Ausführungsbeispiels einer erfindungsgemäßen Vorrichtung 10 zum Befestigen einer Vielzahl von Solarmodulen 21-25 auf eine Außenhaut eines Gebäudes dargestellt. Ohne Einschränkung der Allgemeinheit und zur verbesserten Darstellung zeigt Fig. 17 nur ein einzelnes Solarmodul 21.

Gemäß Fig. 17 ist ein jeweiliges Führungsrohr oder Trägerrohr 301, 302 um das jeweilige Drahtseil 51, 52 angeordnet.

Das Solarmodul 21 ist zum einen unmittelbar mit dem Führungsrohr 301 verbunden und zum anderen mittelbar über eine Ständervorrichtung 310 mit dem Führungsrohr 302 verbunden. Die Ständervorrichtung 310 ist dazu eingerichtet, das Solarmodul 21 von der Außenhaut 30 des Gebäudes 40 aufzuständem und dadurch die auf das Solarmodul 21 einfallende Lichtmenge zu maximieren. Die Ständervorrichtung 310 oder Aufständerung umfasst zumindest einen Ständer oder ein Rohr, beispielsweise die Ständer 311 und 312. Der jeweilige Ständer 311, 312 koppelt ein jeweiliges Ende des Führungsrohres 302 mit dem Solarmodul 21. Zur Einstellung der Länge der Ständer 311, 312 ist eine jeweilige Höheneinstelleinrichtung 311a, 312a vorgesehen.

Die Fig. 18 und 19 illustrieren schematische Ansichten der Kopplung des Führungsrohres 301 mit dem Drahtseil 51. Das Führungsrohr 301 hat einen Schlitz 303. Dabei zeigt Fig. 18 eine offene Stellung, wohingegen Fig. 19 eine geschlossene Stellung zeigt. In der offenen Stellung wird das Führungsrohr 301 auf das Drahtseil oder Tragseil 51 aufgesteckt. Weiter wird ein Haltering 305 auf das Führungsrohr 301 aufgesteckt. Weiterhin wird der Haltering 305 derart gedreht, dass der Schlitz 303 im Führungsrohr 301 geschlossen wird. Anschließend wird der Haltering 305 mittels einer Schraube 304 fixiert. Die Schraube 304 fixiert gleichzeitig das Drahtseil 51 im Führungsrohr 301.

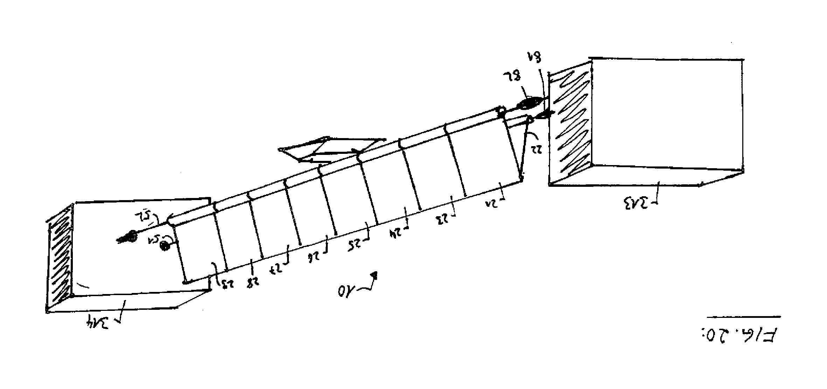

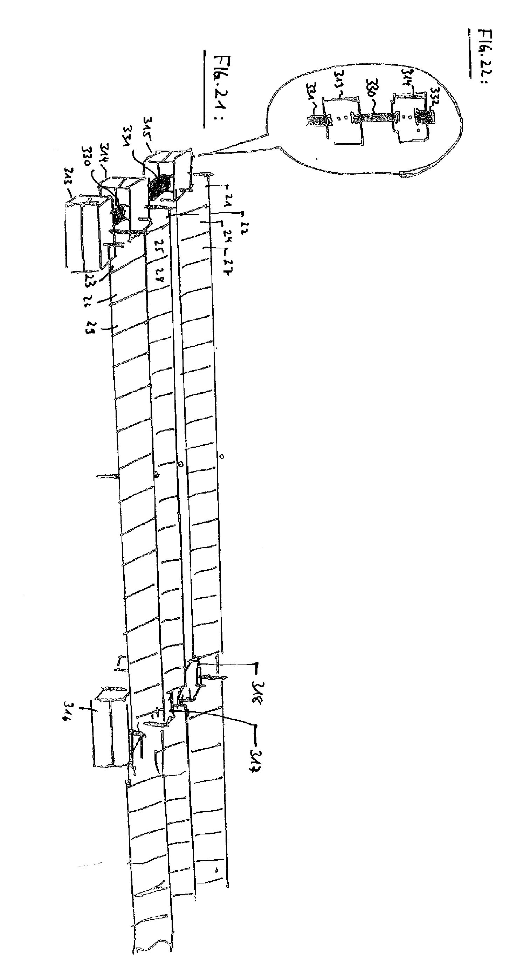

Fig. 20 zeigt eine schematische Ansicht eines neunten Ausführungsbeispiels einer erfindungsgemäßen Vorrichtung 10 zum Befestigen einer Vielzahl von Solarmodulen 21-29 zwischen zwei Befestigungseinrichtungen 313, 314. Die Befestigungseinrichtungen 313, 314 sind beispielsweise als Betonblöcke ausgebildet. Ein solcher Betonblock 313, 314 hat beispielsweise ein Gewicht von zumindest einer Tonne. Zwischen den Betonblöcken 313, 314 sind die Drahtseile 51, 52 mittels Spannsystemen 81-84 gespannt. Ohne Einschränkung der Allgemeinheit sind in Fig. 20 nur zwei Drahtseile 51, 52 dargestellt. Selbstverständlich können zwischen den beiden Betonblöcken 313, 314 eine Vielzahl von Drahtseilen gespannt werden, wobei jeweils zwischen zwei Drahtseilen eine Anordnung der Solarmodule 21-29, wie in Fig. 21 gezeigt, angeordnet wird. Dabei ist eine erste Anzahl von Solarmodulen 21, 23-29 mit dem ersten Drahtseil 51 verbunden. Eine identische Anzahl von Solarmodulen (in Fig. 20 ist nur das Solarmodul 22 sichtbar) ist mit dem zweiten Drahtseil 52 verbunden. Jeweils zwei Solarmodule, beispielsweise die Solarmodule 21 und 23, sind an einem Ende mit dem jeweiligen Drahtseil 51 bzw. 52 und am anderen Ende miteinander verbunden. Somit bilden die Solarmodule, die zwischen den Drahtseilen 51 und 52 angeordnet sind, eine dachartige Anordnung aus.

Des Weiteren zeigt Fig. 21 eine Weiterbildung des Ausführungsbeispiels der Fig. 20. Gemäß Fig. 21 sind die Drahtseile 51-56 und damit die auf den Drahtseilen 51-56 angeordneten Solarmodule 21-29 über eine Vielzahl von Befestigungseinrichtungen 313-318, z.B. Betonblöcke, geführt. Damit eignet sich das Ausführungsbeispiel der Fig. 21 besonders als Freilandanlage.

Hierbei zeigt Fig. 22 eine schematische Detailansicht der Verbindung der Betonblöcke 313 und 314 gemäß Fig. 21. Die beiden Betonblöcke 313 und 314 sind mittels einer Verbindungseinrichtung 330 verbunden. Des Weiteren zeigt Fig. 22 weitere Verbindungseinrichtungen 331, 332.

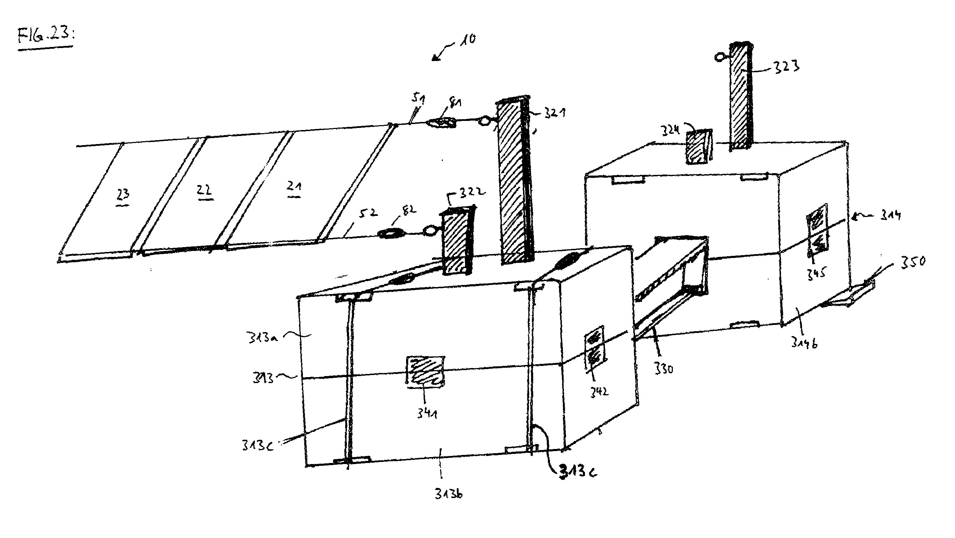

Fig. 23 stellt eine schematische Ansicht eines elften Ausführungsbeispiels einer erfindungsgemäßen Vorrichtung 10 zum Befestigen einer Vielzahl von Solarmodulen 21-23 mittels einer Vielzahl von Befestigungseinrichtungen 313, 314 dar. Das jeweilige Drahtseil, beispielsweise das Drahtseil 51, ist mittels eines Spannsystems 81 mit einer Metallstange 321 gekoppelt oder verbunden.

Zur örtlichen Befestigung der Metallstange 321 und damit des Drahtseils 51 ist die Befestigungseinrichtung 313 vorgesehen. Die Befestigungseinrichtung 313 besteht vorzugsweise aus einem oberen Teil 313a und einem unteren Teil 313b. Die beiden Teile 313a, 313b der Befestigungseinrichtung 313 sind mittels Drahtseilen 313c miteinander verbunden.

Die Befestigungseinrichtungen 313 und 314 sind mittels einer Verbindungseinrichtung 330 gekoppelt. Die Verbindungseinrichtung ist beispielsweise als ein Strahlträger ausgebildet. Für eine waagrechte Positionierung der jeweiligen Befestigungseinrichtung 313, 314 kann ein Unterlegkeil 350 eingesetzt werden.

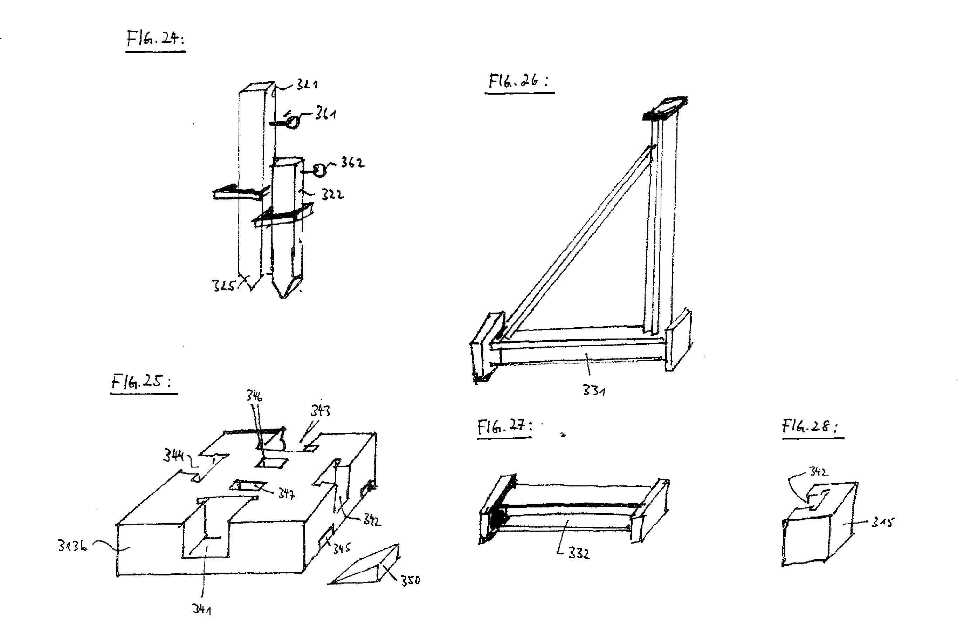

In diesem Zusammenhang zeigt Fig. 24 eine schematische Detailansicht der Metallstangen 321 und 322 der Fig. 23. Die jeweilige Metallstange 321 kann alternativ an ihrem Ende auch eine Spitze 325 zum Einschlagen in den Boden aufweisen. Des Weiteren weist die jeweilige Metallstange eine Befestigung 361, 362 für die Drahtseile 51 bzw. 52 auf.

Weiter zeigt Fig. 25 eine schematische Detailansicht des unteren Teils 313b der Befestigungseinrichtung 313 gemäß Fig. 23. Der untere Teil 313b der Befestigungseinrichtung 313 hat eine Mehrzahl von Aussparungen 341-344, welche zur Aufnahme einer jeweiligen Verbindungsvorrichtung 330, 331, 332 geeignet sind. Eine solche Verbindungsvorrichtung kann beispielsweise wie die Verbindungsvorrichtung 331 der Fig. 26 oder wie die Verbindungsvorrichtung 332 der Fig. 27 ausgebildet sein. Die Verbindungsvorrichtung 331 der Fig. 26 ist beispielsweise als ein Stahlträger ausgebildet, welcher zusätzlich ein Element für eine Auf-Dach-Montage aufweist. Demgegenüber ist die Verbindungsvorrichtung 332 der Fig. 27 als ein Stahlträger ausgebildet, der insbesondere bei einer Freilandanlage zum Einsatz kommt (siehe dazu Fig. 21).

Des Weiteren hat der untere Teil 313b der Fig. 25 auch Aussparungen 346, 347 für die Aufnahme der Metallstangen 321, 322 der Fig. 24 (insbesondere ohne Spitze 325).

Zusätzlich hat der untere Teil 313b der Befestigungseinrichtung 313 eine weitere Aussparung 345 zur Aufnahme eines Unterlegkeils 350.

Ferner zeigt die Fig. 28 eine Befestigungseinrichtung 315, beispielsweise einen Betonblock, zur Terminierung einer erfindungsgemäßen Freilandanlage. Der Betonblock 315 hat insbesondere eine Aussparung 342 zur Aufnahme einer Verbindungsvorrichtung 330, 331, 332.

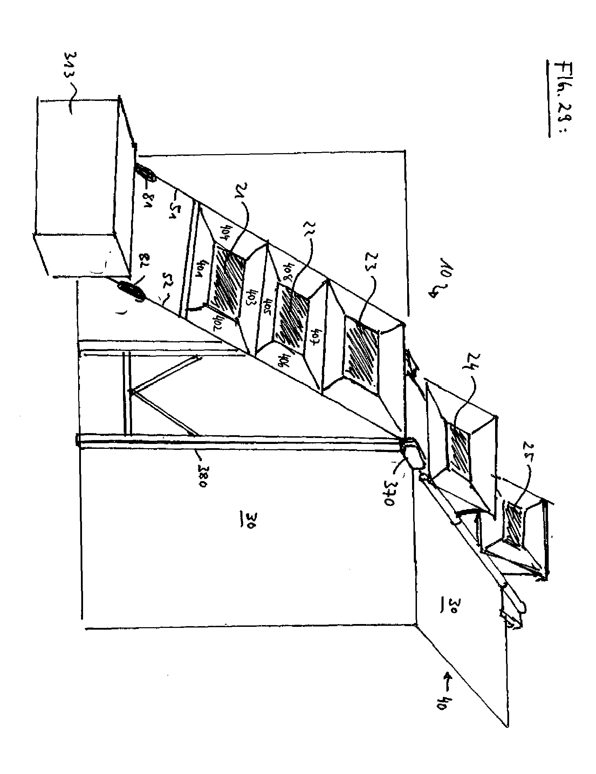

Fig. 29 zeigt eine schematische Ansicht eines zwölften Ausführungsbeispiels einer erfindungsgemäßen Vorrichtung 10 zum Befestigen einer Vielzahl von Solarmodulen 21-25 auf einer Außenhaut 30 eines Gebäudes 40.

Die Drahtseile 51, 52 sind von dem am Boden angeordneten Betonblock 313 kommend über eine Umlenkungseinrichtung 370 auf das Dach des Gebäudes 30 geführt. Die Umlenkungseinrichtung 370 ist vorzugsweise mittels Fassadenstangen 380 gestützt. Es erfolgt eine Reduzierung der Belastung des Daches, da ein wesentlicher Teil des Gewichtes der Vorrichtung 10 auf den Fassadenstangen 380 ruhen kann.

In Fig. 30 ist eine schematische Ansicht eines Ausführungsbeispiels eines erfindungsgemäßen Solarmoduls 21 mit einer Nachführeinrichtung 410 dargestellt.

Ohne Einschränkung der Allgemeinheit ist in Fig. 30 nur ein einzelnes Solarmodul 21 mit einer Nachführeinrichtung 410 dargestellt.

Das Solarmodul 21 ist von einer Anzahl von Reflektoren 401-403 umgeben. Die Reflektoren 401-403 sind dazu eingerichtet, die auf das Solarmodul 21 einfallende Lichtmenge durch Umleitung und begrenzte Konzentration deutlich zu erhöhen.

Damit kann entsprechend mehr elektrischer Strom generiert werden, so dass die Effizienz des jeweiligen Solarmoduls 21 deutlich gesteigert wird. Dabei weisen die Reflektoren eine reflektierende Oberfläche zur Reflexion des auf die Reflektoren 401-403 einfallenden Lichtes auf das jeweilige Solarmodul 21 auf. Der jeweilige Reflektor 401-403 ist beispielsweise aus Metall, einem Textil oder einem Kunststoff hergestellt. Um das Solarmodul 21 vor einer Beschädigung durch eine zu hohe Lichtintensität des auf das Solarmodul 21 einfallenden Lichtes zu schützen, sind die Reflektoren 401-403 derart angeordnet und ausgebildet, dass sie nur einen vorbestimmten Prozentsatz des einfallenden Lichtes zur Begrenzung der Lichtintensität auf das Solarmodul 21 lenken.

Der vorbestimmte Prozentsatz liegt beispielsweise zwischen 20 und 75%, bevorzugt zwischen 20 und 50%, besonders bevorzugt zwischen 25 und 40%.

Die Nachführeinrichtung 410 ist insbesondere an der Rückseite des Solarmoduls 21 mittels eines Montagerahmens 411 befestigt. Dabei umfasst die Nachführeinrichtung 410 auch eine flexible Aufständerung 414. Zur Kopplung der Aufständerung 414 mit dem Montagerahmen 411 sind Gelenke 412, 413 vorgesehen. Die Gelenke 412, 413 umfassen beispielsweise ein oberes Drehgelenk 412 und ein unteres Drehgelenk 413.

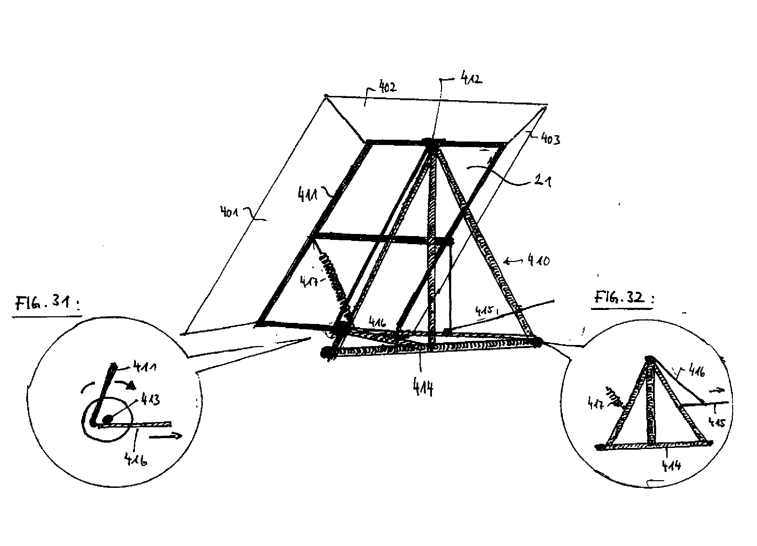

Ferner ist vorzugsweise eine Spiralfeder 417 zur Kopplung zwischen dem Montagerahmen 411 und der Aufständerung 414 vorgesehen. Zur Betätigung oder Steuerung der Nachführeinrichtung 410 sind Zugseile 415, 416 vorgesehen. Details hierzu sind in den Fig. 31 und 32 gezeigt.

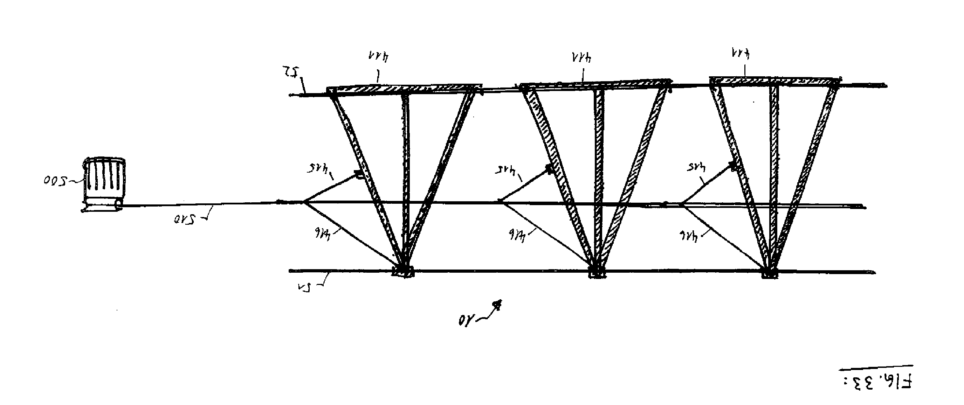

Fig. 33 zeigt eine schematische Ansicht eines dreizehnten Ausführungsbeispiels eine erfindungsgemäße Vorrichtung 10 zum Befestigen einer Vielzahl von Solarmodulen 21-23.

Zur verbesserten Übersichtlichkeit sind die auf den Aufständerungen 411 montierten Solarmodule 21-23 in Fig. 33 nicht dargestellt. Details zu dieser Montage der Solarmodule 21-23 auf die jeweilige Aufständerung 411 ergeben sich aus Fig. 31.

Allerdings zeigt die Fig. 33 die erfindungsgemäße Möglichkeit der Befestigung der Aufständerungen 411 zwischen den beiden Drahtseilen 51 und 52. Somit sind die Drahtseile 51 und 52 dazu geeignet, die Mehrzahl der Aufständerungen 411 und damit eine Mehrzahl von auf den Aufständerungen 411 angeordneten Solarmodulen 21-23 zu haltern. Zur Betätigung der Aufständerungen 411 sind, wie in den Fig. 30-32 erläutert, Zugseile 415, 416 vorgesehen. Die Zugseile 415, 416 sind wiederum mit einem weiteren Zugseil 510 verbunden. Das Zugseil 510 wird durch eine Motorgetriebeeinheit 500 gezogen. Die Motorgetriebeeinheit 500 umfasst insbesondere einen Elektromotor. Somit kann die Stellung der Aufständerungen 411 durch den Elektromotor 500 eingestellt werden.

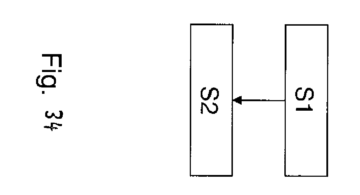

Fig. 34 zeigt ein schematisches Ablaufdiagramm eines Ausführungsbeispiels eines Verfahrens zum Befestigen einer Vielzahl von Solarmodulen 21-25 auf einer Außenhaut 30 eines Gebäudes 40.

Nachfolgend wird das erfindungsgemäße Verfahren anhand des Blockschaltbildes der Fig. 34 mit Bezug auf die Blockschaltbilder der Fig. 1 und 3 näher erläutert. Das erfindungsgemäße Verfahren der Fig. 34 hat die Verfahrensschritte S1 und S2:

### Verfahrensschritt S1

Eine Mehrzahl von Drahtseilen 51-56 wird auf der Außenhaut 30 des Gebäudes angeordnet. Vorzugsweise werden die Drahtseile 51-56 parallel angeordnet. Insbesondere können die Drahtseile 51-56 auch derart angeordnet werden, dass sie ein Drahtseilnetz ausbilden. Das Drahtseilnetz umfasst eine Anzahl vertikal angeordneter und eine Anzahl horizontal angeordneter Drahtseile 51-56. Vorzugsweise sind die vertikal angeordneten Drahtseile 51, 52, 55, 56 parallel zueinander. In analoger Weise sind vorzugsweise die horizontal angeordneten Drahtseile 53, 54 parallel zueinander. Die horizontal angeordneten Drahtseile können auch durch Rohre 91-95 ersetzt sein.

### Verfahrensschritt S2

Die Solarmodule 21-25 werden mittels der Drahtseile 51-56 derart befestigt, dass zumindest jeweils zwei Drahtseile, beispielsweise die Drahtseile 55, 56, eine Mehrzahl der Solarmodule, beispielsweise die Solarmodule 22-25, haltern.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar.

### Bezugszeichenliste

- 10: Vorrichtung
- 21-25: Solarmodul
- 30: Außenhaut
- 40: Gebäude
- 51-56: Drahtseil
- 57-60: Halterungsseil
- 61-64: Ende des Drahtseils, Drahtseilende
- 70: Fundament
- 81-84: Spannsystem
- 91-95: Rohr
- 101-108: Umlenkrolle
- 110: Stahlrohr
- 120: Loch
- 130-136: Befestigungseinrichtung
- 141, 142: Klemmplatte
- 150: Abstandshalter
- 160: Attika
- 170: Quadratrohr
- 180: Auflage
- 190: Dachfolie
- 200: Abstandshalter
- 210: Rohr
- 220: Unterkonstruktion
- 230: hintergriffiges Schlitzloch
- 240: Verschiebesicherung
- 301,302: Führungsrohr
- 303: Schlitz
- 304: Schraube
- 305: Haltering
- 310: Ständervorrichtung
- 311,312: Ständerrohr
- 311 a, 312a: Höheneinstelleinrichtung
- 313-318: Befestigungseinrichtung
- 313a, 314a: oberer Teil der Befestigungseinrichtung
- 313b, 314b: unterer Teil der Befestigungseinrichtung
- 321-324: Metallstange
- 325: Spitze
- 330, 331, 332: Verbindungseinrichtung
- 341-345: Aussparung
- 350: Unterlegteil
- 360,362: Befestigung
- 370: Umlenkungseinrichtung
- 380: Fassadenstange
- 401-08: Reflektor
- 410: Nachführeinrichtung
- 411: Montagerahmen
- 412-413: Gelenk
- 414: Aufständerung
- 415,416: Zugseil
- 417: Spiralfeder
- 500: Motorgetriebeeinheit
- 510: Zugseil

## Patentansprüche

1. Vorrichtung (10) zum Befestigen einer Vielzahl von Solarmodulen (21-25) auf einer Außenhaut (30) eines Gebäudes (40), mit:
einer Mehrzahl auf der Außenhaut (30) angeordneten Seilen (51-56), wobei zumindest jeweils zwei Seile (55, 56) dazu eingerichtet sind, eine Mehrzahl der Solarmodule (22-25) zu haltern.

2. Vorrichtung nach Anspruch 1,
**dadurch gekennzeichnet,**
**dass** das jeweilige Seil (51-56) zumindest einen Teil der Außenhaut (30) überspannt.

3. Vorrichtung nach Anspruch 2,
**dadurch gekennzeichnet,**
**dass** das jeweilige Seil (51-56) zumindest eine Dachhälfte (30), insbesondere beide Dachhälften (30), des Gebäudes (40) überspannt.

4. Vorrichtung nach Anspruch 3,
**dadurch gekennzeichnet,**
**dass** das zumindest ein Ende (61-64) des jeweiligen, zumindest eine Dachhälfte (30) überspannenden Seils (51-54) an einer Außenhaut (30) des Gebäudes (40), an einer tragenden Einrichtung des Gebäudes (40), an einem Fundament des Gebäudes oder an einem eigens vorgesehenen Fundament (70) befestigt ist.

5. Vorrichtung nach Anspruch 4,
**dadurch gekennzeichnet,**
**dass** das jeweilige Ende (61-64) des jeweiligen, beide Dachhälften (30) überspannenden Seils (51-54) an der Außenhaut (30) des Gebäudes (40), an einer tragenden Einrichtung des Gebäudes (40), an einem Fundament des Gebäudes oder an einem eigens vorgesehenen Fundament (70) befestigt ist.

6. Vorrichtung nach Anspruch 4 oder 5,
**dadurch gekennzeichnet,**
**dass** die Seile (51-54) über ein Flachdach (30) des Gebäudes (40) gespannt sind, wobei die Enden (61-64) der Seile (51-54) an einer Attika des Flachdachs (30) befestigt sind.

7. Vorrichtung nach Anspruch 6,
**dadurch gekennzeichnet,**
**dass** ein jeweiliges Halterungsseil parallel zu der jeweiligen Attika angeordnet und an dieser befestigt ist, wobei das jeweilige Halterungsseil dazu eingerichtet ist, die über das Flachdach (30) gespannten Seile (51-56) zum Haltern der Solarmodule (21-25) zu halterm.

8. Vorrichtung nach einem der vorstehenden Ansprüche,
**dadurch gekennzeichnet,**
**dass** die Vorrichtung (10) eine Mehrzahl von auf der Außenhaut (30) angeordneten Rohren (91-95) aufweist, welche unter einem vorbestimmten Winkel, beispielsweise unter 90°, zu den Seilen (51, 52, 55, 56) angeordnet sind.

9. Vorrichtung nach Anspruch 8,
**dadurch gekennzeichnet,**
**dass** die Seile (51, 52, 55, 56) vertikal und die Rohre (91-95) horizontal auf der Außenhaut (30) angeordnet sind oder dass die Rohre (91-95) vertikal und die Seile (51, 52, 55, 56) horizontal auf der Außenhaut (30) angeordnet sind.

10. Vorrichtung nach Anspruch 8 oder 9,
**dadurch gekennzeichnet,**
**dass** die Seile (51-56) durch Löcher oder hintergriffige Schlitzlöcher in den Rohren (91-95) zur Halterung der Rohre (91-95) geführt sind.

11. Vorrichtung nach Anspruch 8 oder 9,
**dadurch gekennzeichnet,**
**dass** die Rohre (91-95) mittels einer jeweiligen Halterungs-Einrichtung auf oder unter den Seilen (51-56) befestigt sind.

12. Vorrichtung nach einem der vorstehenden Ansprüche,
**dadurch gekennzeichnet,**
**dass** zumindest ein Abstandshalter (150) vorgesehen ist, welcher dazu eingerichtet ist, einen Abstand zwischen den Solarmodulen (21-25) und der Außenhaut (30) des Gebäudes (40) bereitzustellen.

13. Vorrichtung nach Anspruch 12,
**dadurch gekennzeichnet,**
**dass** zumindest ein Profilelement aus Kunststoff oder Aluminium als Abstandshalter (150) zwischen den Seilen (51-56) und der Außenhaut (30) verlegt ist.

14. Vorrichtung nach einem der vorstehenden Ansprüche,
**dadurch gekennzeichnet,**
**dass** das jeweilige Seil (51-56) eine Ummantelung, insbesondere eine Kunststoff Ummantelung, aufweist und/oder
**dass** zumindest eine Baustahlmatte zwischen den Elementen der Vorrichtung (10) angeordnet ist, um eine zwischen den Elementen auftretende Reibung zu reduzieren.

15. Verfahren zum Befestigen einer Vielzahl von Solarmodulen (21-25) auf einer Außenhaut (30) eines Gebäudes (40), mit den Schritten:
Anordnen einer Mehrzahl von Seilen (51-56) auf der Außenhaut (30); und
Befestigen der Solarmodule (21-25) mittels der Seile (51-56) derart, dass zumindest jeweils zwei Seile (55, 56) eine Mehrzahl der Solarmodule (22-25) haltern.
